# EUROPÄISCHE PATENTSCHRIFT

(11) **EP 0 585 600 B1**
(45) Veröffentlichungstag und Bekanntmachung des Hinweises auf die Patenterteilung: **10.01.1996**
(21) Anmeldenummer: 93111958.0
(22) Anmeldetag: 27.07.1993
(51) Int. Cl.: B23B 29/32, B23Q 16/04, F16D 7/04

(54) **Spindelkopf für Werkzeugrevolver**
Spindle head for tool turret
Tête de broche pour revolver

(30) Priorität: 31.08.1992 DE 4228946
(43) Veröffentlichungstag der Anmeldung: 09.03.1994
(73) Patentinhaber: Sauter Feinmechanik GmbH, D-72555 Metzingen (DE)
(72) Erfinder: Thumm, Helmut, Dipl.-Ing.(F.H.), D72555 Metzingen (DE); Handel, Friedrich, Dipl.-Ing.(F.H.), D-72555 Metzingen (DE)
(74) Vertreter: Held, Martin, Dr.-Ing.

(56) Entgegenhaltungen:
- DE-A- 3 708 227
- DE-A- 3 730 561
- US-A- 1 479 706

## Beschreibung

Die Erfindung betrifft einen Spindelkopf für Werkzeugrevolver mit einem Gehäuse, in dem drehbar eine Spindel gelagert ist, sowie mit einer Verdrehsicherung, die eine längsverschiebbar, aber undrehbar auf der Spindel angeordnete Buchse aufweist, an der ein erstes Sicherungselement vorgesehen ist, das in seiner wirksamen Stellung, in welcher der axiale Verschiebebereich der Buchse in der einen Richtung formschlüssig begrenzt ist, in Eingriff mit einem zweiten Sicherungselement, das am Gehäuse vorgesehen ist, steht und durch eine axiale Verschiebung der Buchse entgegen der Kraft einer vorgespannten Feder außer Eingriff mit dem zweiten Sicherungselement bringbar ist.

Bei einem Spindelkopf ohne eine Verdrehsicherung (DE 39 30 121 C1) kann die Spindel nicht mittels einer einfachen Kupplung formschlüssig mit der Antriebswelle gekuppelt werden, da die Spindel auch Drehstellungen einnehmen kann, in denen die Kupplungselemente nicht, wie für ein Kuppeln notwendig, aufeinander ausgerichtet sind.

Bei bekannten Spindelköpfen der eingangs genannten Art weist die Buchse an ihrem einen Ende einen radial nach außen abstehenden Ringflansch auf, an dem als Sicherungselement ein sich in axialer Richtung erstreckender Stift oder eine Nase mit in axialer Richtung verlaufenden Begrenzungsflächen vorgesehen ist. Zur Aufnahme des Stiftes oder der Nase ist das Gehäuse mit einer Bohrung oder Nut versehen. Dadurch ist zwar sichergestellt, daß die Spindel die definierte Drehstellung, welche sie beim Abkuppeln von der Antriebswelle einnimmt, beibehält, was nicht nur ein problemloses Kuppeln ermöglicht, sondern auch vielfach eine unerläßliche Voraussetzung für einen automatischen Wechsel des Spindelkopfes ist. Bei diesen bekannten Spindelköpfen kommt es jedoch immer wieder vor, daß die Verdrehsicherung als Gegenhaltung beim Festziehen einer Spannvorrichtung für das mit der Spindel zu verbindende Werkzeug mißbraucht wird, um nicht einen Schlüssel an die Spindel ansetzen und diesen Schlüssel während des Spannens als Gegenhaltung benutzen zu müssen. Die Folge eines solchen Mißbrauches der Verdrehsicherung ist in vielen Fällen ein Abreißen des Stiftes oder der Nase oder deren Beschädigung, die dazu führt, daß die Spindel nicht mehr ordnungsgemäß gegenüber dem Gehäuse ausgerichtet ist.

Bei einem Werkzeugrevolver ist es bekannt (DE-A-3 730 561), in seinem Revolverkopf drehbar gelagerten, radial zur Revolverkopfdrehachse verlaufenden Antriebsspindeln, auf denen auswechselbare Werkzeugköpfe befestigt werden können, je eine Verdrehsicherung zuzuordnen, welche die sich nicht in Arbeitsstellung befindlichen Spindeln in einer vorgegebenen Drehlage festhalten. Diese Verdrehsicherungen weisen je einen federbelasteten, im Revolverkopf radial bezüglich der zugeordneten Spindel verschiebbar gelagerten Rastbolzen auf, der mit einer kegelförmigen Spitze in eine kegelförmige Rastvertiefung der Spindel einzugreifen vermag und mittels einer Aushebevorrichtung aus der Rastvertiefung ausgehoben wird, wenn der Spindelkopf eine Drehlage einnimmt, in der die betreffende Spindel sich in der Arbeitsposition befindet.

Weiterhin ist ein Schneckengetriebe mit einer Überlastkupplung zwischen dem Schneckenrad und der Abtriebswelle bekannt (US-A-1 479 706). Das Schneckenrad ist hierbei auf seiner einen Stirnseite mit Vertiefungen versehen, in welche Vorsprünge einrasten können, welche an der Stirnseite einer gegen das Schneckenrad hin federbelasteten Buchse vorgesehen sind, die drehfest, aber axial verschiebbar mit der Abtriebswelle verbunden ist. Eine Arretierung der Wellen des Getriebes in einer bestimmten Drehlage ist mittels dieser Überlastkupplung nicht möglich. Sie ermöglicht nur bei einer Überlast ein Ausrasten der Vorsprünge aus den Vertiefungen.

Der Erfindung liegt daher die Aufgabe zugrunde, einen Spindelkopf zu schaffen, dessen Verdrehsicherung nicht der Gefahr einer Beschädigung oder Zerstörung ausgesetzt ist. Diese Aufgabe löst ein Spindelkopf mit den Merkmalen des Anspruches 1.

Dadurch, daß von den zusammenwirkenden Flächen der Sicherungselemente wenigstens die eine eine außerhalb der Selbsthemmung liegende Neigung gegenüber der axialen Richtung aufweist, kann das Drehmoment, das über die Sicherungselemente übertragen werden kann, in einfacher Weise auf einen Wert begrenzt werden, der eine Beschädigung oder ein Zerstören ausschließt. Wird nämlich der obere Grenzwert des übertragbaren Drehmomentes überschritten, verschiebt sich das eine Sicherungselement in axialer Richtung entgegen der vorgespannten Feder so weit, bis es außer Eingriff mit dem anderen Sicherungselement ist. Ein weiterer, wesentlicher Vorteil der Erfindung besteht darin, daß dank der Schrägfläche die Verdrehsicherung spielfrei ist und deshalb die Spindel in einer genau definierten Position bezüglich des Gehäuses festhalt. Es wird deshalb ohne eine besondere Präzision sichergestellt, daß das üblicherweise an der Spindel vorgesehene Kupplungsprofil genau auf das Profil des Kupplungsgegenstückes ausgerichtet ist.

Sofern davon ausgegangen werden kann, daß die Verdrehsicherung nur in der einen Drehrichtung einem Drehmoment beim Verbinden oder Lösen eines Werkzeuges mit der Spindel ausgesetzt ist, genügt eine in diese Richtung das Überschreiten eines oberen Grenzwertes des Drehmomentes verhindernde Schrägfläche. Für das entgegengesetzt gerichtete Drehmoment können dann in axialer Richtung verlaufende Flächen vorgesehen sein, ohne daß hierdurch die Spielfreiheit verlorengeht.

In der Regel muß jedoch damit gerechnet werden, daß beim Verbinden und Lösen des Werkzeuges mit der Spindel ein Drehmoment in der einen bzw. anderen Richtung auf die Verdrehsicherung einwirkt. Bei einer bevorzugten Ausführungsform ist deshalb für beide Drehrichtungen je eine Schrägfläche vorgesehen.

Im Prinzip ist es ohne Bedeutung, ob die Schrägfläche oder die Schrägflächen am einen oder anderen Sicherungselement vorgesehen sind. Hat, wie dies bei einer bevorzugten Ausführungsform der Fall ist, das eine Sicherungselement die Form eines Zahnes und das andere die Form einer Ausnehmung, dann ist vorzugsweise im Hinblick auf die Fertigungskosten die Ausnehmung des Gehäuses als eine Nut mit axial verlaufenden Begrenzungsflächen ausgebildet und die Schrägfläche oder Schrägflächen am Zahn vorgesehen. Die Weite der Nut, in welche der Zahn eingreift, ist dabei kleiner als die in der Umfangsrichtung gemessene Fußbreite und größer als die in der Umfangsrichtung gemessene Kopfbreite gewählt.

Ein besonderer Vorteil des erfindungsgemäßen Spindelkopfes ist auch darin zu sehen, daß für die Verdrehsicherung keine zusätzlichen Elemente erforderlich sind und deshalb die übrigen Teile konstruktiv nicht geändert zu werden brauchen.

Im folgenden ist die Erfindung anhand eines in der Zeichnung dargestellten Ausführungsbeispieles im einzelnen erläutert.

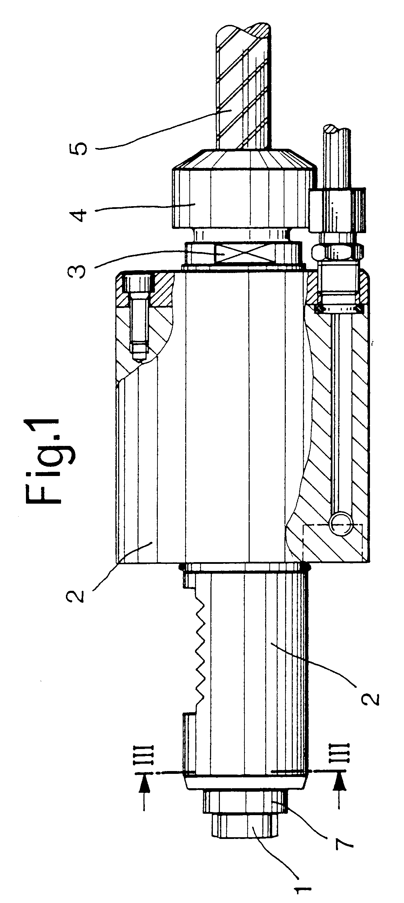

Es zeigen
- Fig. 1: eine Ansicht des Ausführungsbeispieles,
- Fig. 2: einen Schnitt nach der Linie II - II der Fig. 3,
- Fig. 3: einen vergrößert dargestellten Schnitt nach der Linie III - III der Fig. 1.

Ein Spindelkopf für einen Werkzeugrevolver weist eine Spindel 1 auf, die drehbar und axial unverschiebbar in einem Gehäuse 2 gelagert ist. Das über das eine Ende des Gehäuse 2 überstehende Ende der Spindel 1 ist mit zwei diametral gegenüberliegenden Abflachungen 3 versehen, um einen Gabelschlüssel ansetzen zu können. Dieses Ende der Spindel 1 trägt außerdem im Ausführungsbeispiel eine Spannzange, in der durch Drehen einer Spannmutter 4 ein Werkzeug 5 festgelegt werden kann.

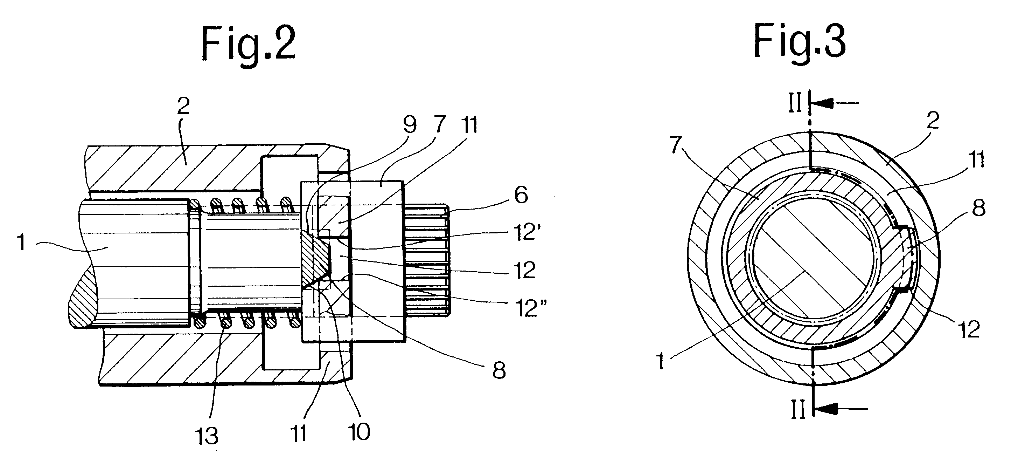

Das andere Ende der Spindel 1, das über die andere Stirnseite des Gehäuses 2 übersteht und mit einer Kupplungsverzahnung 6 in Form eines Keilwellenprofiles versehen ist, trägt axial verschiebbar eine Buchse 7, die ein mit der Kupplungsverzahnung 6 korrespondierendes und in diese eingreifendes Innenprofil hat. Wie die Fig. 2 und 3 zeigen, ist außen an die Buchse 7, und zwar in dem im Inneren des Gehäuses 2 liegenden Endabschnitt, ein Zahn 8 angeformt, der sich in axialer Richtung erstreckt und in Umfangsrichtung durch je eine Flanke 9 bzw. 10 begrenzt ist. Der Zahn 8 hat hierdurch ein Trapezprofil. Der Neigungswinkel der beiden Flanken 9 und 10 gegenüber der axialen Richtung ist deutlich größer als der Grenzwinkel des Selbsthemmungsbereiches. Im Ausführungsbeispiel sind die beiden Flanken 9 und 10 je um 30° gegenüber der axialen Richtung gegeneinander geneigt, so daß sie einen Winkel von 60° einschließen und ein symmetrisches Zahnprofil ergeben.

Für den Eingriff des Zahnes 8 ist ein radial nach innen vorspringender Flansch 11 am Ende des Gehäuses 2 mit einer den Flansch 11 in axialer Richtung durchdringenden und radial nach innen offenen Nut 12 versehen, die ein rechteckförmiges Querschnittsprofil hat. Ihre beiden sie in Umfangsrichtung begrenzenden Flanken 12' und 12'' verlaufen deshalb parallel zueinander und in axialer Richtung. Wie Fig. 2 zeigt, ist der Abstand der beiden Flanken 12' und 12'' voneinander in Umfangsrichtung kleiner als die Fußbreite des Zahnes 8 in Umfangsrichtung, aber größer als die Kopfbreite des Zahnes 8 in diese Richtung. Der Zahn 8 kann deshalb nur mit einem Teil seiner Höhe in die Nut 12 eindringen. Hierdurch ist sichergestellt, daß der Zahn 8 dann, wenn er sich in seiner Eingriffstellung befindet, spielfrei an den beiden Flanken 12' und 12'' der Nut 12 anliegt.

Eine die Spindel 1 umfassende und sich an einer Schulter derselben abstützende, vorgespannte Schraubenfeder 13 stützt sich andererseits an der innen im Gehäuse 2 liegenden Stirnfläche der Buchse 7 ab und sucht deshalb die Verdrehsicherung, welche durch die Buchse 7, den Zahn 8 und die Nut 12 gebildet wird, in der wirksamen Stellung zu halten, in welcher die Spindel 1 in einer genau definierten Drehstellung bezüglich des Gehäuses 2 steht.

Da die Buchse 7 in der wirksamen Stellung der Verdrehsicherung ebenso wie das mit der Kupplungsverzahnung 6 versehene Ende der Spindel 1 aus dem Gehäuse 2 herausragt, wird die Verdrehsicherung selbsttätig durch eine Verschiebung der Buchse 7 entgegen der Kraft der Schraubenfeder 13 gelöst, wenn das Spindelende 1 in ein Kupplungsgegenstück eingeführt wird. Ein Lösen der Verdrehsicherung erfolgt aber auch dann automatisch, wenn zum Gegenhalten beim Schließen oder Öffnen der Spannzange nicht ein Schlüssel an die Spindel 1 im Bereich von deren Abflachungen 3 angesetzt wird. Die Verdrehsicherung kann nämlich nur ein begrenztes Drehmoment übertragen, wobei durch die Kraft der Schraubenfeder 13 und den Neigungwinkel der Flanken 9 und 10 dieses Drehmoment auf einen Wert begrenzt ist, bei dem keine Gefahr einer Beschädigung der Flanken 9 und 10 des Zahnes 8 oder der Flanken 12' und 12'' der Nut besteht. Da zwischen dem Zahn 8 und der Nut 12 keine Selbsthemmung vorhanden ist, wird, wenn das auf die Verdrehsicherung einwirkende Drehmoment den festgelegten Wert überschreitet, der Zahn 8 aus der Nut 12 herausgedrängt, wobei die Buchse 7 entgegen der Kraft der Schraubenfeder 13 weiter in das Gehäuse 2 hineingeschoben wird, bis der Zahn 8 vollständig außer Eingriff mit der Nut 12 ist.

Der Innendurchmesser des Flansches 11 des Gehäuses 2 ist so groß gewählt, daß die Buchse 7 von dem durch den Flansch 11 gebildeten Ende des Gehäuses her in dieses eingeführt werden kann, ehe der mit der Kupplungsverzahnung 6 versehene Endabschnitt der Spindel 1 durch die Buchse 7 hindurchgesteckt wird. Da außerdem die Feder 13 von dem mit der Kupplungsverzahnung 6 versehenen Ende her auf die Spindel 1 aufgeschoben werden kann, ist die Montage äußerst einfach. Außerdem kann der Flansch 11 einstückig mit dem Gehäuse 2 ausgebildet sein, braucht also nicht wie bei den bekannten Spindelköpfen als Deckel ausgebildet zu sein, der mit dem Gehäuse verschraubt wird.

## Patentansprüche

1. Spindelkopf für Werkzeugrevolver mit einem Gehäuse (2), in dem drehbar eine Spindel (1) gelagert ist, sowie mit einer Verdrehsicherung, die eine längsverschiebbar, aber unverdrehbar auf der Spindel (1) angeordnete Buchse (7) aufweist, an der ein erstes Sicherungselement (8) vorgesehen ist, das in seiner wirksamen Stellung, in welcher der axiale Verschiebebereich der Buchse (7) in der einen Richtung formschlüssig begrenzt ist, in Eingriff mit einem zweiten Sicherungselement (12), das am Gehäuse (2) vorgesehen ist, steht und durch eine axiale Verschiebung der Buchse (7) entgegen der Kraft einer vorgespannten Feder (13) außer Eingriff mit dem zweiten Sicherungselement (12) bringbar ist, dadurch gekennzeichnet, daß von den in der wirksamen Stellung der Sicherungselemente (8, 12) selbsthemmungsfrei zusammenwirkenden Flächen (9, 10, 12', 12'') wenigstens diejenige des ersten Sicherungselementes (8) gegenüber der axialen Richtung in einem die Selbsthemmung ausschließenden Maße geneigt ist.

2. Spindelkopf nach Anspruch 1 , dadurch gekennzeichnet, daß das eine Sicherungselement die Form eines sich in axialer Richtung erstreckenden Zahnes (8) hat, dessen eine Flanke (9) die außerhalb des Selbsthemmungsbereiches liegende Neigung aufweist, und das andere Sicherungselement die Form einer Ausnehmung.

3. Spindelkopf nach Anspruch 2, dadurch gekennzeichnet, daß die andere Flanke des Zahnes (8) in axialer Richtung verläuft.

4. Spindelkopf nach Anspruch 2, dadurch gekennzeichnet, daß beide Flanken (9, 10) des Zahnes (8) gegenüber der axialen Richtung in dem eine Selbsthemmung ausschließenden Maße geneigt sind.

5. Spindelkopf nach einem der Ansprüche 2 bis 4, dadurch gekennzeichnet, daß die Ausnehmung (12) durch in axialer Richtung verlaufende Flächen (12', 12'') begrenzt ist und daß der in Umfangsrichtung gemessene Abstand dieser Flächen (12', 12'') kleiner ist als die in Umfangsrichtung gemessene größte Breite des Sicherungselementes (8), das die Form eines Zahnes hat.

6. Spindelkopf nach einem der Ansprüche 2 bis 5, dadurch gekennzeichnet, daß der Zahn (8) an der Buchse (7) und die vorzugsweise als Nut ausgebildete Ausnehmung (12) im Gehäuse (2) vorgesehen sind.

7. Spindelkopf nach Anspruch 6, dadurch gekennzeichnet, daß die als Nut ausgebildete Ausnehmung (12) in einem einstückig mit dem Gehäuse (2) ausgebildeten Ringflansch (11) vorgesehen ist, dessen Innendurchmesser größer ist als der Außendurchmesser der Buchse (7) im Bereich des Zahnes (8).

## Claims

1. Spindle head for a tool turret with a housing (2), in which a spindle (1) is mounted to rotate, and with means for protection against torsion, which comprise a bush (7) able to move longitudinally but non-rotatably disposed on the spindle (1), on which a first locking member (8) is provided, which in its operative position, in which the axial displacement range of the bush (7) in one direction is restricted in a form-locking manner, is in engagement with a second locking member (12), which is provided on the housing (2) and due to an axial displacement of the bush (7) against the force of a pretension spring (13), can be brought out of engagement with the second locking member (12), characterised in that of the surfaces (9, 10, 12', 12'') cooperating in a manner free from self-locking in the operative position of the locking members (8, 12), at least that of the first locking member (8) is inclined to an extent excluding self-locking, with respect to the axial direction.

2. Spindle head according to Claim 1, characterised in that one locking member is in the form of a tooth (8) extending in the axial direction, whereof one flank (9) has an inclination lying outside the self-locking range, and the other locking member has the shape of a recess.

3. Spindle head according to Claim 2, characterised in that the other flank of the tooth (8) extends in the axial direction.

4. Spindle head according to Claim 2, characterised in that both flanks (9, 10) of the tooth (8) are inclined to an extent precluding self-locking, with respect to the axial direction.

5. Spindle head according to one of Claims 2 to 4, characterised in that the recess (12) is defined by surfaces (12', 12'') extending in the axial direction and that the distance between these surfaces (12', 12'') measured in the peripheral direction is smaller than the greatest width of the locking member (8), measured in the peripheral direction, which is in the form of a tooth.

6. Spindle head according to one of Claims 2 to 5, characterised in that the tooth (8) is provided on the bush (7) and the recess (12) preferably constructed as a groove is provided in the housing (2).

7. Spindle head according to Claim 6, characterised in that the recess (12) constructed as a groove is provided in an annular flange (11) constructed in one piece with the housing (2), the inner diameter of which flange is greater than the outer diameter of the bush (7) in the region of the tooth (8).

## Revendications

1. Tête de broche de revolver pour revolver porte-outil comprenant un carter (2) dans lequel une broche (1) est disposée de manière rotative, ainsi qu'une sécurité anti-rotation comprenant une douille (7) disposée sur la broche (1) de manière à pouvoir être déplacée dans le sens longitudinal mais non pas dans les sens de rotation, ladite douille comprenant un premier élément de sécurité (8) limité, dans sa position efficace dans laquelle la plage de mouvement dans le sens axial de la douille (7) est limitée dans l'une des deux directions, est introduite dans un deuxième élément de sécurité (12) prévu dans le carter (2) et en ce qu'elle peut sortir dudit deuxième élément de sécurité (12) par le déplacement de ladite douille (7) dans le sens axial contre l'effort d'un ressort précontraint (13), **caractérisé en ce que**, parmi les faces (9, 10, 12', 12'') concourants sans auto-blocage dans la position efficace des éléments de sécurité (8, 12), au moins celle du premier élément de sécurité (8) est inclinée dans un angle donné par rapport au sens axial excluant tout auto-blocage.

2. Tête de broche selon la revendication 1, caractérisée en ce que l'un des éléments de sécurité présente la forme d'une dent (8) allongée dans le sens axial dont un flanc (9) présente une inclinaison située au-dehors de la plage d'auto-blocage et en ce que l'autre élément de sécurité présente la forme d'un évidement.

3. Tête de broche selon la revendication 2, caractérisée en ce que l'autre flanc de la dent (8) est orienté dans le sens axial.

4. Tête de broche selon la revendication 2, caractérisée en ce que les deux flancs (9, 10) de la dent (8) sont inclinés à un angle donné par rapport au sens axial excluant tout auto-blocage.

5. Tête de broche selon l'une quelconque des revendications 2 à 4, caractérisée en ce que l'évidement (12) est limité par des faces (12', 12'') orientées dans le sens axial et en ce que l'écartement entre ces deux faces (12', 12'') mesuré dans le sens circonférentiel, est inférieur à la largeur maximale, mesurée dans le sens circonférentiel, de l'élément de sécurité (8) en forme de dent.

6. Tête de broche selon l'une quelconque des revendications 2 à 5, caractérisée en ce que la dent (8) est prévue sur la douille (7) et que l'évidement (12) réalisé, de préférence, sous la forme d'une rainure est prévu sur le carter (2).

7. Tête de broche selon la revendication 6, caractérisée en ce que l'évidement (12) réalisé sous la forme d'une rainure est prévue dans une bride annulaire (11) formée en une seule pièce avec le carter (2), le diamètre intérieur de ladite bride étant supérieur au diamètre extérieur de la douille (7) dans la zone de la dent (8).
